## Europäisches Patentamt
## European Patent Office
## Office européen des brevets

(19)

(11) Veröffentlichungsnummer: **0 121 904**
**B1**

(12) **EUROPÄISCHE PATENTSCHRIFT**

(45) Veröffentlichungstag der Patentschrift:
20.07.88

(51) Int. Cl.⁴: **B 25 J 19/00**, G 01 L 1/24

(21) Anmeldenummer: **84103736.9**

(22) Anmeldetag: **04.04.84**

(54) **Druckabbildungssystem.**

(30) Priorität: 04.04.83 US 482071

(43) Veröffentlichungstag der Anmeldung:
17.10.84 Patentblatt 84/42

(45) Bekanntmachung des Hinweises auf die Patenterteilung:
20.07.88 Patentblatt 88/29

(84) Benannte Vertragsstaaten:
AT BE CH DE FR GB IT LI LU NL SE

(56) Entgegenhaltungen:
DE-A-691 431
US-A-3 966 326

V.D.I.-ZEITSCHRIFT, Band 125, Nr. 5, März 1983,
Seiten 143-149, Düsseldorf, DE; E. EBERHARDT et
al.: "Sensorausrüstung und Regelung von Greifern
für Industrieroboter"

(73) Patentinhaber: Siemens Aktiengesellschaft Berlin
und München, Wittelsbacherplatz 2, D-8000
München 2 (DE)

(72) Erfinder: Chiu, Ming- Yee, 78 Boothby Drive, Mt.
Laurel, NJ 08054 (US)
Erfinder: Tsikos, Constantine J., 5316 King
Avenue, Pennsauken, NJ 08109 (US)

EP 0 121 904 B1

**Beschreibung**

Die Erfindung betrifft ein Druckabbildungssystem zur Beschreibung der Konfiguration eines in Kontakt mit dem System gebrachten Objekts, mit einer Einrichtung zur Erzeugung eines Lichts, einer Sensorplatte, die lichttransparent ist, einer in Kontakt mit der Sensorplatte stehenden Matrix, deren Unterseite in Kontakt mit der Sensorplatte steht und mit einer Einrichtung zum Empfang des durch die Sensorplatte reflektierten Lichts sowie eine Vorrichtung zur Kontaktierung von Objekten, die ein derartiges Druckabbildungsystem umfaßt

Ein derartiges Druckabbildungssystem ist aus der US-A-3 966 326 bekannt. Bei dem dort beschriebenen System wird die mit der starren Sensorplatte in Kontakt stehende Matrix durch ein blattformiges, transparentes, photoelastisches Material mit einer lichtreflektierenden Beschichtung und ein darüber angeordnetes, flexibles Blatt mit nach unten gerichteten punktförmigen Vorsprüngen gebildet. Die Druckverteilung eines mit dieser kompliziert aufgebauten Matrix in Kontakt gebrachten Gegenstandes ergibt sich dann als optisches Interferenzmuster, das durch die verschiedenen mechanischen Beanspruchungen des photoelastischen Materials und die resultierenden Änderungen der optischen Eigenschaften erzeugt wird.

Andere bekannte Verfahren zur Bestimmung oder Definition eines von einer Sensorvorrichtung kontaktierten Objekts benutzen elektrische Wandler. Derartige Wandler sind komplex, inhärent teuer und neigen zu Ausfall, insbesondere wenn sie in einer Produktionsumgebung bzw. -stätte, beispielsweise einer Fabrik, verwendet werden.

Aufgabe der vorliegenden Erfindung ist es, eine billige, dafür aber sehr zuverlässige Vorrichtung zur Bestimmung der Konfiguration eines Objekts oder Gegenstandes anzugeben.

Die Lösung dieser Aufgabe erfolgt bei einem gattungsgemäßen Druckabbildungssystem durch

a. eine Einrichtung zur Erzeugung kollimierten Lichts;

b. einen optischen Strahlteiler, der so angeordnet ist, daß er das kollimierte Licht empfängt;

c. eine flexible Sensorplatte, deren die Kontaktfläche bildende Oberseitenfläche das kollimierte Licht nach seinem Durchgang durch den Strahlteiler und die Sensorplatte reflektiert; und durch

d. eine Einrichtung zur Bestimmung der Konfiguration des Objekts auf der Basis des reflektierten Lichts.

Das erfindungsgemäße Druckabbildungssystem ermöglicht durch die angegebene neue Anordnung optischer Komponenten insbesondere eine Beschreibung oder Abbildung eines Objekts mit hoher Auflösung bei sehr niedrigen Kosten.

Die Einfachheit der Konstruktion im Vergleich zu anderen Methoden zur Bestimmung eines Objekts bedeutet eine hohe Zuverlässigkeit, weil sehr wenige Teile ausfallen können. Außerdem können alle notwendigen Reparaturen schnell ausgeführt werden, was einen beträchtlichen Gewinn an Betriebszeit im Vergleich zu den elektrischen Systemen zur Folge hat, die inhärent komplexer sind und deshalb mehr Erfahrung, Sachkenntnis und Reparaturzeit erfordern.

Die hohe Zuverlässigkeit und Einfachheit der Erfindung macht sie gut geeignet für eine Fertigungsumgebung, wo sie in eine Robotervorrichtuzng eingebaut oder als Identifizierungssystem benutzt werden kann.

Gemäß bevorzugter Ausführungsformen der Erfindung weist die Einrichtung zur Erzeugung kollimierten Lichts eine Glühbirne und eine Linse auf; der Strahlteiler ist kubusförmig; der Strahlteiler ist aus Glas gefertigt; der Strahlteiler weist eine diagonale Zwischenfläche oder Strahlteilerfläche auf, welche den Teiler längs einer diagonalen Ebene halbiert; die Sensorplatte besteht ebenfalls aus einem Silikonelastomer mit einer flachen Oberseite und mehreren pyramidenförmigen Vorsprüngen auf ihrer Unterseite; die Einrichtung zum Empfang reflektierten Lichts weist ein Fotodetektorfeld, beispielsweise eine CCD-Kamera oder ein Vidikon auf, das die Konfiguration des Objekts auf der Grundlage der Verteilung des reflektierten Lichts bestimmt; die fokussierende Linse empfängt das reflektierte Licht und fokussiert das Licht auf das Fotodetektorfeld; der Fotodetektor stellt eine Einrichtung zur Umwandlung der zweidimensionalen Lichtverteilung in elektrische Signale zur Bestimmung der Konfiguration des Objekts dar.

Gemäß einer anderen bevorzugten Ausführungsform der Erfindung umfaßt das System eine Einrichtung zur Erzeugung einer Videoanzeige des Objekts, die aus den elektrischen Signalen erzeugt wird.

Die Erfindung gibt auch eine Vorrichtung zur Kontaktierung von Objekten an, die ein vorstehend beschriebenes Druckabbildungssystem umfaßt. Diese Vorrichtung ist gekennzeichnet durch ein erfindungsgemäß ausgebildetes System als integraler Teil der Kontaktfläche der Vorrichtung, wodurch es der Vorrichtung ermöglicht ist, die Konfiguration des kontaktierten Objekts zu bestimmen. Vorzugsweise ist die Vorrichtung ein integraler Teil einer Robotervorrichtung.

Weitere Eigenschaften und Vorteile der Erfindung ergeben sich aus der nachfolgenden Beschreibung einer bevorzugten Ausführungsform der Erfindung anhand der Figuren und aus den Ansprüchen. Von den die bevorzugte Ausführungsform darstellenden Figuren zeigen:

Fig. 1 eine schematische Darstellung der bevorzugten Ausführungsform,

Fig. 2 eine schematische Darstellung der in Kontakt mit einem Objekt stehenden bevorzugten Ausführungsform, und

Fig. 3 eine vergrößerte Ansicht der in Fig. 2 gezeigten Matrix.

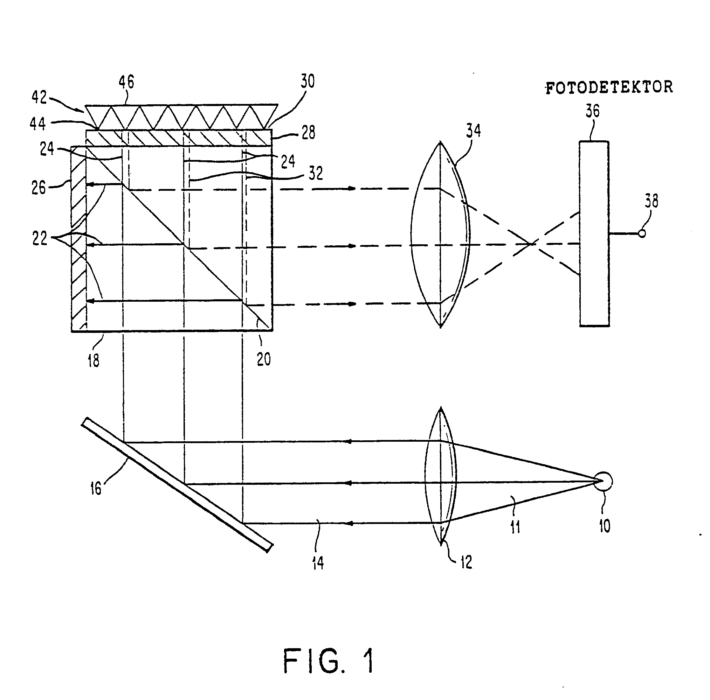

Das in Figur 1 gezeigte Druckabbildungssystem weist eine Lichtquelle 10 auf, die einen Lichtstrahl 11 erzeugt, der eine Linse 12 durchstrahlt und von dieser kollimiert wird. Die Lichtquelle 10 kann eine Glühlampe oder eine lichtemittierende Diode sein.

Der kollimierte Lichtstrahl 14 trifft auf einen Spiegel 16 und wird als Parallelstrahl in einen Strahlteiler 18 reflektiert. Der Strahlteiler 18 besteht typischerweise aus einem Glas, das von einer diagonalen Zwischenfläche 20 halbiert wird.

Der in den Strahlteiler eintretende Lichtstrahl trifft auf die Zwischenfläche 20, die einen Teil 22 des einfallenden Lichts nach der linken Seite des Strahlteilers reflektiert und den verbleibenden Lichtanteil 24 durch die Oberseite des Strahlteilers leitet. Das Licht 22 wird durch eine schwarze Fläche 26 absorbiert.

Das Licht 24 durchstrahlt eine Sensorplatte 28, die aus einem transparenten Silikonelastomer oder Gummi besteht, das bzw. der auf der Oberseite des Strahlteilers 18 angeordnet ist. Das Licht trifft auf eine Kontaktfläche 30, welche die Oberseitenfläche der Sensorplatte bildet.

Die Kontaktfläche 30 reflektiert das auftreffende Licht als reflektiertes Licht 32 zurück zur Zwischenfläche 20. Die Zwischenfläche lenkt das reflektierte Licht 32 zur Linse 34, welche das Licht auf ein Fotodetektorfeld 36 fokussiert.

Der Fotodetektor entwickelt aus dem Licht elektrische Signale, welche dem Betrag des auftreffenden Lichts entsprechen.

Auf der Kontaktfläche 30 ruht eine Matrix 42, die aus zahlreichen flexiblen Vorsprüngen 44 besteht, die an einer Oberseitenfläche 46 miteinander verbunden sind. Die Oberseitenfläche 46 muß sehr dünn und flexibel sein, so daß Deformationen auf einem Bereich der Fläche in Abhängigkeit von der Plazierung eines Objekts auf diesem Bereich nur eine minimale Wirkung auf den umgebenden Oberflächenbereich hat.

Typischerweise ist diese Matrix 42 aus einem Silikonelastomer gebildet, das eine flache Oberseitenfläche und eine Unterseitefläche aufweist, die aus einem regulären zweidimensionalen Feld aus vielen kleinen Pyramiden besteht. Die räumliche Dichte der Pyramiden bestimmt die Auflösung des Druckbildes. Eine typische Matrix weist Abmessungen von 2,54 x 2,54 cm auf und hat eine Dicke von 2 oder 3 mm, wobei die untenliegende Oberfläche ein Feld aus 100 x 100 Pyramiden aufweist.

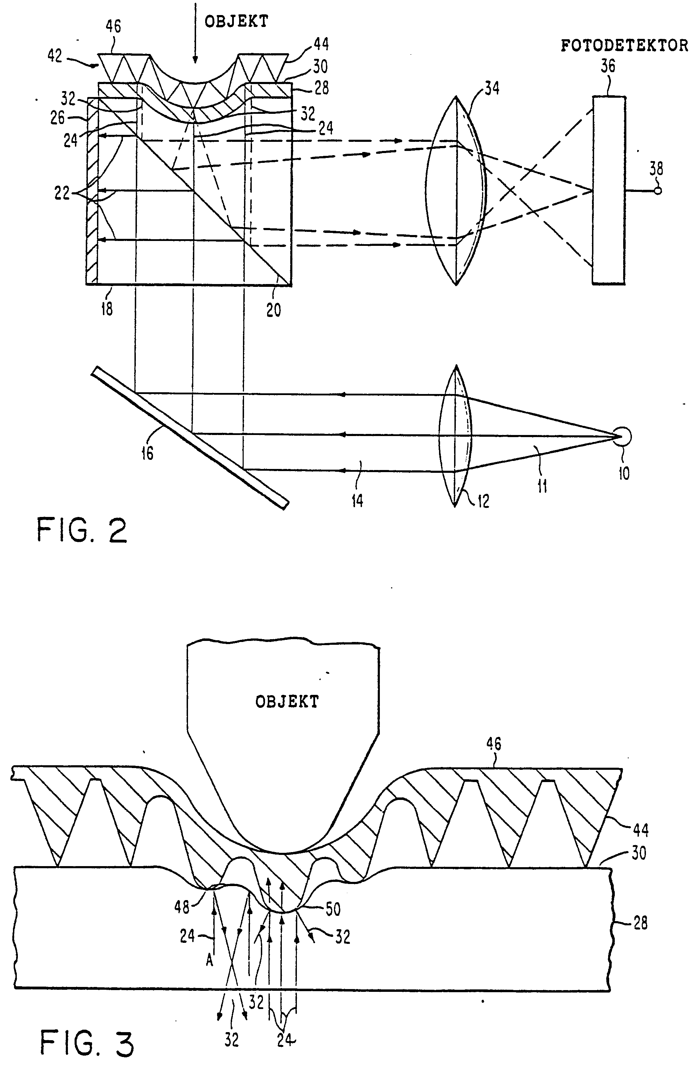

Anhand der Figuren 2 und 3 wird die Arbeitsweise im einzelnen beschrieben.

Ein mit der Oberseitenfläche 46 in Kontakt kommender Gegenstand deformiert die Fläche im Verhältnis zum Objekt. Eine Sensorplatte 28, deren obere Kontaktfläche in direktem Kontakt mit der Matrix 42 steht, deformiert sich ebenfalls. Die Deformation der Sensorplatte stimmt mit der Deformation der Matrix überein. Sowohl die Matrix 42 als auch die Sensorplatte 28 sind in den Figuren 2 und 3 in ihren deformierten Stellungen gezeigt. Sowohl die Sensorplatte 28 als auch die Matrix 42 gehen in ihre undeformierten Stellungen zurück, wenn der Kontakt mit dem Gegenstand endet.

Wenn die Matrix eine durch zahlreiche Punkte 44 erzeugte rauhe Unterseite aufweist, stimmt der deformierte Teil der Sensorplatte mit der rauhen Unterseite überein und es wird Licht, das auf den deformierten Bereich auftrifft, durch die Rauhheit der Oberfläche gestreut. Diese Streuung reduziert die durch die deformierten Teile des Sensors 28 zur Zwischenfläche 20 reflektierte Lichtmenge 32. Das durch die undeformierten Bereiche oder Abschnitte der Sensorplatte 28 reflektierte Licht 32 wird ohne wesentliche Streuung direkt reflektiert und deshalb ist es von größerer Intensität, als das reflektierte gestreute Licht.

Das durch den deformierten Teil des Sensors 28 reflektierte Licht 32 ist in der Figur 3 detaillierter dargestellt.

Der Abschnitt 28 der oberen Kontaktfläche 30, der zwischen benachbarten Vorsprüngen angeordnet ist, erzeugt eine glatte konkave optische Fläche, welche das reflektierte Licht 32 auf einen Punkt A konzentriert.

Licht, welches auf den Abschnitt 50 der obenliegenden Kontaktfläche trifft, die in Kontakt mit einem Vorsprung 44 steht, wird gestreut, so daß dieser Teil reflektierten Lichts 32 von geringerer Intensität ist als das durch den Abschnitt 48 der Sensorplatte reflektierte Licht.

Das reflektierte Licht 32 wird durch die Zwischenfläche zur Linse 34 geleitet, welche das Licht auf verschiedene Teile des Fotodetektorfeldes fokussiert.

Unter Anwendung konventioneller Techniken erzeugt das Fotodetektorfeld elektrische Signale in Abhängigkeit von dem einfallenden Licht, die proportional zum Betrag bzw. der Menge des Lichts sind, das auf die Teile des Fotodetektors fällt.

Diese Signale sind auf die Deformation der Sensorplatte 28 bezogen bzw. entsprechen dieser Deformation, und deshalb sind sie proportional zur Druckverteilung, die auf der Sensorplatte durch das auf sie plazierte Objekt bzw. den auf sie plazierten Gegenstand erzeugt wird. Die von diesen Signalen erzeugte Fotodetektorausgabe 38 kann zum Definieren der Größe und Form des auf der Sensorplatte plazierten Objekts und zur Erzeugung eines Videobildes des Objekts auf einer nicht dargestellten konventionellen Kathodenstrahlröhreanzeige benutzt werden.

Das von dem Fotodetektorfeld 36 direkt erhaltene Druckbild ist ein reguläres Feld von Punkten, von denen jeder einem Kontaktpunkt einer Spitze eines Vorsprungs mit der Sensorplatte entspricht. Weil der Kontaktbereich zwischen der Spitze der Projektion und der Oberseitenfläche der Sensorplatte annähernd proportional zu dem auf den Vorsprung ausgeübten Druck ist, haben die Punkte variable Flächen oder Bereiche, welche die auf die Matrix ausgeübte Druckvariation definieren. Deshalb ist die Druckinformation in dem Bereich oder der Fläche des resultierenden Bildes kodiert. Diese Art des bereichs- oder flächenmodulierten Bildes wird üblicherweise als "Halbton"-Bild bezeichnet und ähnelt einem auf eine Zeitung gedruckten Bild.

Wenn ein Druckbild mit kontinuierlichem Ton anstelle eines Halbtonbildes gewünscht ist, kann das Bild durch Defokussierung verschmiert werden. Dies wird durch eine Bewegung der Linse 34 derart ausgeführt, daß das Bild leicht defokussiert wird, so daß das reguläre Punktemuster ein Grautonbild wird, welches der Druckvariation entspricht. Im wesentlichen ist dies eine konventionelle Raumfrequenz-Tiefpaßfilterung

Gemäß einer bevorzugten Ausführungsform kann das Druckabbildungssystem in die Fingerspitze einer Roboterhand eingebaut sein, beispielsweise derart, daß die Sensorplatte 28 an der Außenfläche der Fingerspitze angeordnet ist.

Wenn die Fingerspitze in Kontakt mit einem Objekt kommt, deformiert sich die Sensorplatte und der Roboter kann die Ausgabe 38 dazu benutzen, auf der Grundlage der über dem Sensor erzeugten Druckverteilung die Konfiguration des Objekts zu bestimmen.

Gemäß einer anderen Ausführungsform kann die Fotodetektorausgabe dazu benutzt werden, ein Videobild des Objekts auf einer nicht dargestellten Kathodenstrahlröhrenanzeige unter Anwendung konventioneller Techniken anzuzeigen, zur Identifizierung von Teilen in einer Fertigungsumgebung bzw. -stätte.

Es wurde ein Druckabbildungssystem zur Beschreibung der Konfiguration eines Objekts auf der Grundlage einer Druckverteilung beschrieben, die von einem Kontakt zwischen einer Sensorplatte und dem Objekt herrührt. Zur Beschreibung der Druckverteilung verwendete optische Signale werden in elektrische Signale umgewandelt, die zum Bestimmen des Objekts benutzt werden können.

**Patentansprüche**

1. Druckabbildungssystem zur Beschreibung der Konfiguration eines in Kontakt mit dem System gebrachten Objekts, mit
- einer Einrichtung (10, 12) zur Erzeugung eines Lichts (14),
- einer Sensorplatte (28), die lichttransparent ist, einer in Kontakt mit der Sensorplatte (28) stehenden Matrix (42), deren Unterseite in Kontakt mit der Senorplatte (28) steht und mit
- einer Einrichtung (34, 36) zum Empfang des durch die Sensorplatte reflekierten Lichts (32), gekennzeichnet durch
a. eine Einrichtung (10, 12) zur Erzeugung kollimierten Lichts (14);
b. einen optischen Strahlteiler (18), der so angeordnet ist, daß er das kollimierte Licht (14) empfängt;
c. eine flexible Sensorplatte (28), deren die Kontakt fläche bildende Oberseitenfläche das kollimierte Licht (24) nach seinem Durchgang durch den Strahlteiler (18) und die Sensorplatte (28) reflektiert; und durch
d. eine Einrichtung zur Bestimmung der Konfiguration des Objekte auf der Basis des reflektierten Lichts.

2. System nach Anspruch 1, dadurch gekennzeichnet, daß die Einrichtung (10, 12) zur Erzeugung kollimierten Lichts (14) eine Glühbirne (10) und eine Linse (12) aufweist.

3. System nach Anspruch 1 oder 2, dadurch gekennzeichnet, daß der Strahlteiler (18) kubusförmig ist.

4. System nach Anspruch 3, dadurch gekennzeichnet, daß der Strahlteiler (18) eine diagonale Zwischenfläche (20) aufweist, welche den Strahlteiler (18) längs einer diagonalen Ebene des Teilers halbiert.

5. System nach einem der vorhergehenden Ansprüche, dadurch gekennzeichnet, daß der Strahlteiler (18) aus Glas gefertigt ist.

6. System nach einem der vorhergehenden Ansprüche, dadurch gekennzeichnet, daß die Sensorplatte (28) aus einem Silikonelastomer besteht.

7. System nach einem der vorhergehenden Ansprüche, dadurch gekennzeichnet, daß die Matrix (42) aus einem Silikonelastomer besteht, das eine flache Oberseite (46) und mehrere Pyramidenformige Vorsprünge (44) auf seiner Unterseite aufweist.

8. System nach einem der vorhergehenden Ansprüche, dadurch gekennzeichnet, daß die Matrix (42) ein Gewebematerial mit einer glatten Oberseite und einer gleichmäßig rauhen Unterseite aufweist.

9. System nach einem der vorhergehenden Ansprüche, dadurch gekennzeichnet, daß die Einrichtung (34, 36) zum Empfang des reflektierten Lichts (32) ein Fotodetektorfeld (36) aufweist, welches die Konfiguration des Objekts auf der Basis der Verteilung des reflektierten Lichts (32) bestimmt.

10. System nach Anspruch 9, dadurch gekennzeichnet, daß die Einrichtung (34, 36) zum Empfang des reflektierten Lichts (32) eine fokussierende Linse (35) aufweist, welche das reflektierte Licht (32) empfängt und dieses Licht auf das Fotodetektorfeld (36) fokussiert. .

11. System nach Anspruch 9 oder 10, dadurch gekennzeichnet, daß das Fotodetektorfeld (36) eine Einrichtung zum Umwandeln der Lichtverteilung in elektrische Signale zur Bestimmung der Konfiguration des Objekts bereitstellt.

12. System nach Anspruch 11, dadurch gekennzeichnet, daß eine Einrichtung zur Erzeugung einer Videoanzeige des Objekts vorgesehen ist, welche Anzeige aus den elektrischen Signalen erzeugt wird.

13. Vorrichtung zur Kontaktierung von Objekten, die ein System nach einem der vorhergehenden Ansprüche umfaßt, gekennzeichnet durch ein System nach einem der vorgehenden Ansprüche als integraler Teil der Kontaktfläche der Vorrichtung, wodurch es der Vorrichtung ermöglicht ist, die Konfiguration des kontaktierten Objekt zu bestimmen.

14. Vorrichtung nach Anspruch 13, dadurch gekennzeichnet, daß die Vorrichtung ein integraler Teil einer Robotervorrichtung ist.

## Claims

1. A pressure imaging system for describing the configuration of an object brought into contact with the system comprising:
- a device (10, 12) which generates a light (14),
- a sensor plate (28) which is light-transparent,
- a matrix (42) which is in contact with the sensor plate (28) and whose underside is in contact with the sensor plate (28), and
- a device (34, 36) which receives the light (32) reflected by the sensor plate, characterised by
a) a device (10, 12) which generates collimated light (14);
b) an optical beam-splitter (18) which is arranged in such manner that it receives the collimated light (14);
c) a flexible sensor plate (28) whose upper surface forms the contact surface, and reflects the collimated light (24) when it has passed through the beam-splitter (18) and the sensor plate (28); and
d) a device which determines the configuration of the object on the basis of the reflected light.

2. A system as claimed in Claim 1, characterised in that the device (10, 12) for the generation of collimated light (14) comprises an electric bulb (10) and a lens (12).

3. A system as claimed in Claim 1 or Claim 2, characterised in that the beam-splitter (18) is cube-shaped.

4. A system as claimed in Claim 3, characterised in that the beam-splitter (18) has a diagonal intermediate surface (20) which divides the beam-splitter (18) along a diagonal plane thereof.

5. A system as claimed in one of the preceding Claims, characterised in that the beam-splitter (18) is manufactured from glass.

6. A system as claimed in one of the preceding Claims, characterised in that the sensor plate (28) consists of a silicon elastomer.

7. A system as claimed in one of the preceding Claims, characterised in that the matrix (42) consists of a silicon elastomer which comprises a flat upper side (46) and a plurality of pyramid-shaped projections (44) on its underside.

8. A system as claimed in one of the preceding Claims, characterised in that the matrix (42) comprises a fabric material with a smooth upper side and a uniformly-rough underside.

9. A system as claimed in one of the preceding Claims, characterised in that the device (34, 36) which receives the reflected light (32) comprises a photo-detector field (36) which determines the configuration of the object on the basis of the distribution of the reflected light (32).

10. A system as claimed in Claim 9, characterised in that the device (34,36) which receives the reflected light (32) comprises a focussing lens (34) which receives the reflected light (32) and focusses this light onto the photo-detector field (36).

11. A system as claimed in Claim 9 or 10, characterised in that the photo-detector field (36) makes available a device for converting the light distribution into electric signals to determine the configuration of the object.

12. A system as claimed in Claim 11, characterised in that a device is provided for generating a video display of the object, which display is produced from the electric signals.

13. A device for contacting objects which includes a system as described in one of the preceding Claims, characterised by a system corresponding to one of the preceding Claims as an integral part of the contact surface of the device, which permits the device to determine the configuration of the contacted object.

14. A device as claimed in Claim 13, characterised in that the device forms an integral part of a robot.

## Revendications

1. Système de prise d'une empreinte avec mise en oeuvre d'une pression, permettant de saisir la configuration d'un objet placé en contact avec ce système, et comportant
- un dispositif (10, 12) servant a produire une lumière (14),
- une plaque de détection (28), qui est transparente,
- une matrice (42), qui est en contact avec la plaque de détection (28) et dont la face inférieure est en contact avec cette plaque de détection (28), et
- un dispositif (34, 36) servant à recevoir la lumière (32) réfléchie par la plaque de détection, caractérisé par
a. un dispositif (10, 12) servant a produire une lumière collimatée (14);
b. un diviseur optique de rayonnement (18), qui est disposé de manière a recevoir la lumière collimatée (14);
c. une plaque flexible de détection (28), dont la surface supérieure, qui forme la surface de contact, réfléchit la lumière collimatée (24) après qu'elle ait traversé le diviseur de rayonnement (18) et la plaque de détection (28) ; et
d. un dispositif pour déterminer la configuration de l'objet sur la base de la lumière réfléchie.

2. Système suivant la revendication 1, caractérisé par le fait que le dispositif (10, 12) servant à produire une lumière collimatée (14),
comporte une lampe à incandescence (10) et une
lentille (12).

3. Système suivant la revendication 1 ou 2,
caractérisé par le fait que le diviseur de
rayonnement (18) possède la forme d'un cube.

4. Système suivant la revendication 3,
caractérisé par le fait que le diviseur de
rayonnement (18) comporte une surface
intermédiaire diagonale (20), qui subdivise le
diviseur de rayonnement (18) le long d'un plan
diagonal.

5. Système suivant l'une des revendications
précédentes, caractérisé par le fait que le
diviseur de rayonnement (18) est réalisé en verre.

6. Système suivant l'une des revendications
précédentes, caractérisé par le fait que la plaque
de détection (28) est réalisée en un élastomère au
silicone.

7. Système suivant l'une des revendications
précédentes, caractérisé par le fait que la matrice
(42) est réalisée en un élastomère au silicone, qui
possède une face supérieure plate (46) et
plusieurs parties saillantes (44) en forme de
pyramides, sur sa face inférieure.

8. Système suivant l'une des revendications
précédentes, caractérisé par le fait que la matrice
(42) possède un matériau en forme de tissu
possédant une face supérieure lisse et une face
inférieure uniformément rugueuse.

9. Système suivant l'une des revendications
précédentes, caractérisé par le fait que le
dispositif (34, 36) servant à recevoir la lumière
réfléchie (32) possède un panneau formant
photodétecteur (36), qui détermine la
configuration de l'objet sur la base de la
distribution de la lumière réfléchie (32).

10. Système suivant la revendication 9,
caractérisé par le fait que le dispositif (34, 36)
servant à recevoir la lumière réfléchie (32)
comporte une lentille de focalisation (34), qui
reçoit la lumière réfléchie (32) et focalise cette
lumière sur le panneau formant photodétecteur
(36).

11. Système suivant la revendication 9 ou 10,
caractérisé par le fait que le panneau formant
photodétecteur (36) forme un dispositif servant à
convertir la distribution de la lumière en des
signaux électriques pour déterminer la
configuration de l'objet.

12. Système suivant la revendication 11,
caractérisé par le fait qu'il est prévu un dispositif
servant à produire un affichage vidéo de l'objet,
cet affichage étant obtenu à partir des signaux
électriques.

13. Dispositif destiné à venir en contact avec
des objets et incluant un système suivant l'une
des revendications précédentes, caractérisé par
un système suivant l'une des evendications
précédentes, utilisé en tant que partie intégrante
de la surface de contact du dispositif, ce qui
permet à ce dernier de déterminer la
configuration de l'objet avec lequel il vient en
contact.

14. Dispositif suivant la revendication 13, caractérisé par le fait que ce dispositif fait partie
intégrante d'un système de robot.

FIG. 1

FIG. 2

FIG. 3